# EUROPEAN PATENT APPLICATION

(11) **EP 2 690 834 A1**
(43) Date of publication of application: **29.01.2014**
(21) Application number: 13174366.8
(22) Date of filing: 28.06.2013
(51) Int. Cl.: H04L 12/58, G06Q 10/10, H04L 29/12

(54) **Automatic generation of virtual distribution lists**

(30) Priority: 27.07.2012 IN DE23342012
(71) Applicant: Alcatel Lucent, 75007 Paris (FR)
(72) Inventor: Rajapandiyan, Karthick, 600096 Chennai (IN)
(74) Representative: Raets, David

(57) **Abstract**

Systems and methods for generating and providing virtual distribution lists to users of a communication system are described. According to the present subject matter, the system(s) implement the described method(s) for generating and providing virtual distribution lists to users of the communication system. The method includes identifying a plurality of users of the communication system with identical identity tags and accessing directory services, where the identical identity tags comprises one of a primary identity tag and a secondary identity tag associated with a user from amongst the plurality of users, and the secondary identity tag associated with the user is user defined. The method further includes dynamically generating, a virtual distribution list including the identified plurality of users, where the virtual distribution list allows simultaneous e-mail sharing among the plurality of users.

## Description

### FIELD OF INVENTION

The present subject matter relates to communication systems and, particularly, but not exclusively, to generating virtual distribution lists.

### BACKGROUND

Electronic communicating devices such as laptops, computers, tablets, and mobile phones, have seemingly become a ubiquitous part of today's work culture. These devices are configured to exchange electronic media content between multiple users. With the increasing use of such communicating devices, Electronic mail (email) has become a pervasive method for communication, especially in organizations where it allows for quick and seamless communication between a sender and a recipient, irrespective of whether they are located in the same geographical location, such as the same building, or overseas.

Increasing sizes of organizations and more and more use of emails for communication has made it almost incumbent for organizations to maintain email related data of employees in a structured manner. Organizations implement computer based structured storage systems to store such information where dedicated mail servers maintain and manage the data being exchanged along with associated users data, such as mailing addresses and user locations.

With the development of protocols of electronic communication, email distribution techniques have also developed. Users can now exchange emails with multiple users through a common distribution list, generally known as public email distribution list. Such email distribution lists are used to simultaneously send the same email to multiple recipients and therefore, have become an invaluable tool for users who often manage large groups of email addresses. While some distribution lists are limited to a relatively small number of people, for example, a department or a work group, other distribution lists may be quite large. For example, it is common for organizations to provide an "all employees" distribution list. As large multinational organization have thousands of employees, even a relatively small email may use substantial resources by being replicated to over thousands of user mailboxes throughout the email system. However, such lists offer an efficient and effective means to sort recipients into logical groupings and send emails when necessary.

### SUMMARY

This summary is provided to introduce concepts related to generation of virtual distribution lists. This summary is not intended to identify essential features of the claimed subject matter nor is it intended for use in determining or limiting the scope of the claimed subject matter.

In one implementation, a method to generate and provide virtual distribution list for users of a communication system is described. The method includes identifying a plurality of users of a communication system with identical identity tags and accessing directory services. The identical identity tags comprises one of a primary identity tag and a secondary identity tag associated with a user from amongst the plurality of users, and the secondary identity tag associated with the user is user defined. The method further includes dynamically generating, a virtual distribution list including the identified plurality of users, where the virtual distribution list allows simultaneous e-mail sharing among the plurality of users.

In another implementation, a system for generating and providing virtual distribution list for users of a communication system is described. The system includes a processor and a tag detection module coupled to the processor. The tag detection module is configured to identify a plurality of users of a communication system with identical identity tags and accessing directory services. The identical identity tags comprises one of a primary identity tag and a secondary identity tag associated with a user from amongst the plurality of users, and where the secondary identity tag associated with the user is user defined. The system further includes a list generation module coupled to the processor and, configured to dynamically generate a virtual distribution list including the identified plurality of users, where the virtual distribution list allows simultaneous e-mail sharing among the plurality of users.

In another implementation, a computer-readable medium having embodied thereon a computer readable program code for executing a method is described. The method includes identifying a plurality of users of a communication system with identical identity tags and accessing directory services. The identical identity tags comprises one of a primary identity tag and a secondary identity tag associated with a user from amongst the plurality of users, and the secondary identity tag associated with the user is user defined. The method further includes dynamically generating, a virtual distribution list including the identified plurality of users, where the virtual distribution list allows simultaneous e-mail sharing among the plurality of users.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Fig. 1 illustrates an exemplary communication system implementation, implementing a system to generate virtual distribution lists, according to an embodiment of the present subject matter;

Fig. 2(a) illustrates a method of generating and providing virtual distribution lists users of the communication system, in accordance with an embodiment of the present subject matter;

Fig. 2(b) illustrates a method of dynamically associating a user to an existing virtual distribution lists, in accordance with an embodiment of the present subject matter

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

Systems and methods for providing virtual distribution lists for communication systems are described. The methods can be implemented in various servers and communication devices communicating through various networks. The servers and computing systems that can implement the described method(s) include, but are not limited to, mail server, central directory servers, database server, file server, print server, web server, application server, notebooks, tablets, network access adaptors, and the like. Although the description herein is with reference to mail servers, the methods and systems may be implemented in other server providing directory services, albeit with a few variations, as will be understood by a person skilled in the art. Further, the description has been provided with respect of Lightweight Directory Access Protocol (LDAP) and it would be understood that the techniques described can be utilized in other protocols, albeit with a few variations, as will be understood by a person skilled in the art.

Although email distribution lists is a feature available to different users provided by organizations through different networks, the methods and systems described herein are access independent, and support multiple access types including Global System for Mobile (GSM), Wideband Code Division Multiple Access (W-CDMA), Code Division Multiple Access (CDMA), Wireless Local Area Network (WLAN), Wireline, Local Area Network (LAN), and other networks providing connectivity.

Nowadays, email distribution lists are being used quite extensively to send one email to many users in the distribution list. Such distribution lists provide the ease of providing the same information to different users at one go. However, to configure and maintain such lists, resources of computing systems, such as that of mail servers as well as manpower are utilized. For example, prior to the existence of any particular distribution list, the list's name, its members, and other details are to be provided to a person in-charge, such as a distribution list administrator, for creation of the list. Further, the distribution lists created once, are generally not editable by users, such as members of the distribution list themselves. Therefore, in future, for inclusion of any member or deletion of any already existing member, a request to the person in-charge may be made. Any user without editing privileges over the distribution list service provided by mail server may not be able to include/delete his name from an existing distribution list. This necessitates that each request be forwarded to the person in-charge, often leading to a situation where a bottleneck is created when the number of requests are high.

Also, the creation of any public distribution lists is not at discretion of a particular group of users and generally cannot be done unless approved by the person in-charge, such as a distribution list administrator, i.e., in situations where a group of users wish to create an independent distribution list for their collective email addresses, an approval of the same may be requested from the distribution list administrator before updating any such list to a central mail/distribution list server.

Some conventional distribution list applications allow a user to create a group and add members when authentication credentials like login and password are provided to the user by the person in-charge. Such users with authorized credentials to create/modify public distribution lists are referred to as moderators for that group of people included in the public distribution list. So several moderators are responsible for overall maintenance of distribution list server of each one of their groups and all the groups in turn are maintained by one or more distribution list administrators. This requires quite some amount of resource including skilled labor for the entire process.

It is a general practice that users, for example, users within an organization, access their mail servers via a specific mail client. Such mail clients communicate with a mail server, for example, mail server of the organization to exchange mail data and provide email to the respective users. For example, Microsoft Exchange Server™ may be accessed by the users of an organization using Microsoft Outlook™ as their mail client. However, users can only send and receive emails through these mail clients and not identify existing distribution lists, if the same are unknown to the user. For example, while utilizing Microsoft Outlook™ for sending emails, a user may send an email to a public distribution list "managers@abc.com" known to him for sending the email to all the managers of an organization 'abc'. To send the same email to different team leads of the same organization, the user may select individual team lead's email addresses and send the email even though a distribution list "team_leads@abc.com" may exist that may include all the team leads of the organization. In such situations, if the user is unaware of any existing distribution lists, it is not possible for him to identify or retrieve the same without any communication from a person in knowledge of such list.

Conventionally organizations also provide directory services accessible through mail clients such that users can easily find other e-mail addresses of users on the Internet or organization's intranet. The directory services allow sharing of information between applications, such as mail client and central servers in an efficient manner. The directory services are generally computer-based structural storage systems that store, organize, and provide access to information in a directory and allow the lookup of values given an attribute, similar to a dictionary. Although the features of directory services allow dynamic searching of data related to users including e-mail data and even distribution lists, creation of new distribution lists and, inclusion/deletion of users from such already existing distribution lists still requires approval and updating in the mail server.

According to an implementation of the present subject matter, systems and methods for providing virtual distribution lists for communication systems are described. In one implementation, the virtual distribution lists include email addresses of users, for example, employees of an organization or a workgroup. The users may either be connected through local intranet of the organization or through internet provided via different means. Virtual distribution lists may include email addresses of included members similar to a public distribution list however, such virtual distribution list may not be described and created on a central server. In another implementation, the virtual distribution list may also include information other than email addresses of included members, such as names, designations, geographical locations, and departments. As described before, the systems and methods can be implemented in a variety of processing and communicating devices capable of communicating with a network according to various different standards defined for the communication.

The systems and methods as described herein, on one hand, provide virtual distribution list that are neither externally defined on a mail server, nor restricted by regular updation by a person in-charge, and on the other hand, also provide a user with capability of including/deleting their email address from an existing virtual distribution list dynamically. A user or a group of users may also create/delete a virtual distribution list dynamically without requesting an update from a person in-charge.

In general, as described before, organizations implement directory services to exchange information between mail clients and central servers, also referred to as mail servers interchangeably hereinafter, such as directory servers for quick lookups in a structured store of data. In different organizations, such central servers provide these directory services to a plurality of interconnected mail clients. Each mail client in turn utilizes the central server to access the structured store of data. For the sake of explanation, it should be understood that the central server referred hereinafter may include mail server and severs providing directory services. It would also be understood that the central server may implement either both the mail and directory services or one of any such service, and act as a mail server, directory server, or both.

A directory service typically has two main components: a database that contains the information in the directory, and protocols that are used to access that information. LDAP is a protocol that software programs can use to query directory services so users can easily find other e-mail addresses and related data on the Internet or an organization's intranet. Microsoft Exchange Server™ and Microsoft Outlook™ supports LDAP queries, enabling users to look up address information on the server. Although the implementation of LDAP has been described for an organization's or a workplace's intranet, it would be understood by those skilled in the art that LDAP can also be used to search a number of global directory services on the Internet, such as Google™ and Yahoo™.

Different Internet standards including different protocols have been defined in various releases of LDAP published by Internet Engineering Task Force (IETF) along with the network working group. The IETF publishes Request for Comments (RFC) as memorandums describing methods, behaviors, research, or innovations applicable to the working of the Internet and Internet-connected systems. The LDAP defines that mail clients may perform protocol operations against servers where a client transmits a protocol request describing the operation to be performed to the server. The central server is then responsible for performing the necessary operation(s) in the Directory.

According to an implementation of the present subject matter, LDAP 'Who am I?' operation is used to define virtual mailing lists and identify users associated with any given virtual distribution list. RFC 4532 is a memorandum published by the IETF describing the "Who am I?" operation for directory services. The RFC 4532 specification describes a LDAP "Who am I?" operation which mail clients can use to obtain the primary authorization identity, which the central server has associated with the user or an application entity used by the user. As would be understood by those skilled in the art, each user or application entity used by the user is associated with a separate unique authorization identity for the sake of authorization and differentiation from other users. Further, prior to any operation carried for the client, its identity is validated based on the associated authorization identity and henceforth, the operation is processed under the validated identity.

As described earlier, the LDAP "Who am I?" operation is used to obtain the authorization identity the central server has associated with the client utilized by a user. In certain situations, the central server may associate more than one authorization identity with one user in which case, the "Who am I?" operation allows the users to retrieve a primary authorization identity, in its primary form, from amongst the more than one authorization identities associated with the user. The LDAP "Who am I?" operation also allows the client to retrieve a bind Distinguished Name (DN) associated with the current connection between the central server and the client which can then be utilized as primary keys to entries in the directories of the central server. Therefore, in other words, the LDAP "Who am I?" operation provides with a means to the clients utilized by the users to find out the user's identity associated with the central server.

Generally, the "Who am I?" operation is initiated by defining a 'Who am I?' tag against the email details of the user, hereinafter referred to as a primary 'Who am I?' tag. For example, if a user is associated with an organization implementing directory services and, has a name John Williams, his email details can be represented as: '*John Williams (JohnW)*', where the string inside the parenthesis 'JohnW' is defined as the 'Who am I?' tag of the LDAP. The email details, including the 'Who am I?' tag, are available with the client utilized by the user to connect with the central server. In the above described situation, the 'Who am I?' tag 'JohnW' would be the primary 'Who am I?' tag associated with John Williams.

According to an implementation of the present subject matter, each user of an organization utilizing directory services may define a secondary 'Who am I?' tag associated with their email details to create/modify virtual distribution lists. For example, further to the above mentioned situation, John William working as a manager of the organization may be working with two more managers with the name, Marla Synthon and Dave Stark having their 'Who am I?' tag as 'Marla' and 'DaveSK', respectively. Each manager, including John, Marla, and Dave, may define a secondary 'Who am I?' tag, 'managers' to be associated with each of John, Marla, and Dave. In such implementation, all the users with identical 'Who am I?' tag would be dynamically combined to effectively create a virtual distribution list 'managers'.

Therefore, according to an implementation of the present subject matter, dynamic virtual distribution lists may be identified based on 'Who am I?' tags associated with different user. Further, different users may modify their 'Who am I?' tag to dynamically include/exclude themselves from any virtual distribution list.

In another implementation of the present subject matter, each user may include more than one secondary 'Who am I?' tags to include themselves in more than one virtual distribution list. For example, John Williams, along with a secondary 'Who am I?' tag of 'Managers' may also include another secondary 'Who am I?' tag of "researchers'. In the organization, there may be 20 different users who have the 'Who am I?' tag of 'Researchers' (primary or secondary) and therefore, a virtual distribution list 'Researchers' may be dynamically updated to include 21 members including John Williams. Thereby, making John Williams a part of two different virtual mailing lists, 'Managers' and 'Researchers'.

Although, it has been described by the way of example that a user may be included in two different virtual mailing lists, in one implementation, each user may be included in multiple different virtual mailing lists. Further, although it has been shown that a user may define different secondary 'Who am I?' tags and include multiple secondary 'Who am I?' tags, according to another implementation of the present subject matter, users may append the primary 'Who am I?' tag with more than one secondary 'Who am I?' tags. For example, John Williams, apart from retaining his primary 'Who am I?' tag of 'JohnW' may append the secondary 'Who am I?' tags of 'Managers' and 'Researchers' to the 'Who am I?' tag of 'JohnW' to form a 'Who am I?' tag of 'JohnW; Managers; Researchers'. Although the different 'Who am I?' tags have been described to be separated through colons (;), the different 'Who am I?' tags may be separated through any known separator, such as comma (,), space ( ), hyphen (-), and slash (/ and \).

Although the present description has been defined with respect of LDAP protocol and associated 'Who am I?' tag, it would be appreciated that the virtual distribution lists may also be created where protocols other than LDAP are utilized and tags associated with each user are identity tags and not particularly 'Who am I?' tags of LDAP. Therefore, it would be appreciated that the primary 'Who am I?' tag would be a primary identity tag and the secondary 'Who am I?' tag would be a secondary identity tag associated with the user.

Therefore, based on the described method virtual distribution lists can be created that are neither externally defined on a mail server, nor restricted by regular updation by a person in-charge. Further, the virtual distribution lists provides a user with capability of including/deleting their email address from an existing virtual distribution list dynamically.

According to an implementation of the present subject matter, upon dynamically mapping identical 'Who am I?' tags to create virtual distribution lists; the virtual distribution lists may also be provided to users as an operation of directory services. In other words, users may be provided with existing virtual distribution lists based on identifiers provided by the users. For example, during an attempt to send e-mails to all the researchers of an organization, a user may provide an identifier 'Researchers' to a client application, such as Microsoft Outlook. In such a situation, along with a directory list with 21 individual names including John William; an option of 'All Researchers' distribution list may also be provided. This would enable a user to select the 'All Researchers' option and send the same email to all 21 users at least having the 'Who am I?' tag of 'Researchers'. It would be appreciated that in such situation, a public distribution list defined at the central mail server does not exist and the mail sent to the "All Researchers" virtual distribution list is directly and simultaneously sent to all the 21 users, providing the functionality of virtual distribution list.

In another implementation, apart from providing actual intended distribution lists created based on intended 'Who am I?' tags, such as 'Researchers' and 'Managers' users would also be provided with options to send emails to all 'JohnW's or all 'DaveSK's in the organization. Since the virtual distribution list creation is done dynamically based on identical 'Who am I?' tags, all users with 'Who am I?' tag 'JohnW' can also be sent one mail by a single selection.

The described methodologies can be implemented in hardware, firmware, software, or a combination thereof. For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof. Herein, the term "system" encompasses logic implemented by software, hardware, firmware, or a combination thereof.

For a firmware and/or software implementation, the methodologies can be implemented with modules (e.g., procedures, functions, and so on) that perform the functions described herein. Any machine readable medium tangibly embodying instructions can be used in implementing the methodologies described herein. For example, software codes and programs can be stored in a memory and executed by a processing unit. Memory can be implemented within the processing unit or may be external to the processing unit. As used herein the term "memory" refers to any type of long term, short term, volatile, nonvolatile, or other storage devices and is not to be limited to any particular type of memory or number of memories, or type of media upon which memory is stored.

In another firmware and/or software implementation, the functions may be stored as one or more instructions or code on a non transitory computer-readable medium. Examples include computer-readable media encoded with a data structure and computer-readable media encoded with a computer program. Computer-readable media may take the form of an article of manufacturer. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media.

In addition to storage on computer readable medium, instructions and/or data may be provided as signals on transmission media included in a communication apparatus. For example, a communication apparatus may include a transceiver having signals indicative of instructions and data. The instructions and data are configured to cause one or more processors to implement the functions outlined in the claims. That is, the communication apparatus includes transmission media with signals indicative of information to perform disclosed functions. At a first time, the transmission media included in the communication apparatus may include a first portion of the information to perform the disclosed functions, while at a second time the transmission media included in the communication apparatus may include a second portion of the information to perform the disclosed functions.

It should be noted that the description merely illustrates the principles of the present subject matter. It will thus be appreciated that those skilled in the art will be able to devise various arrangements that, although not explicitly described herein, embody the principles of the present subject matter and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

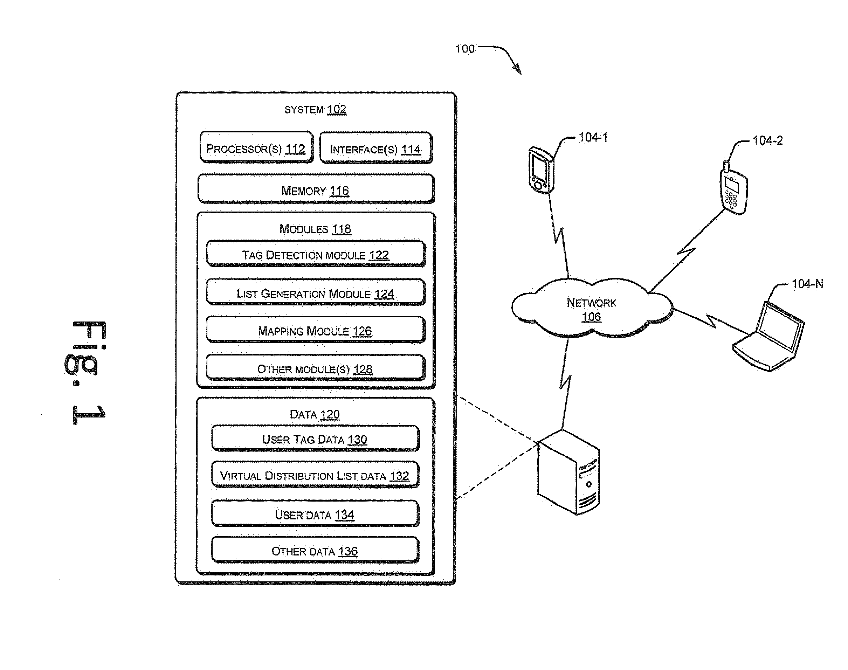

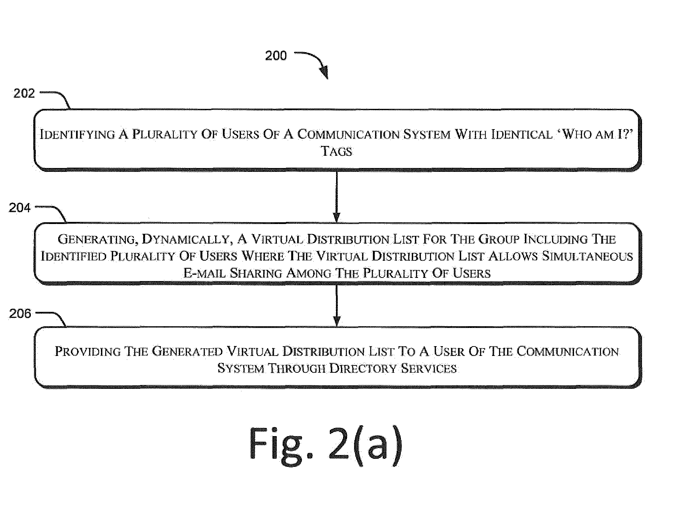

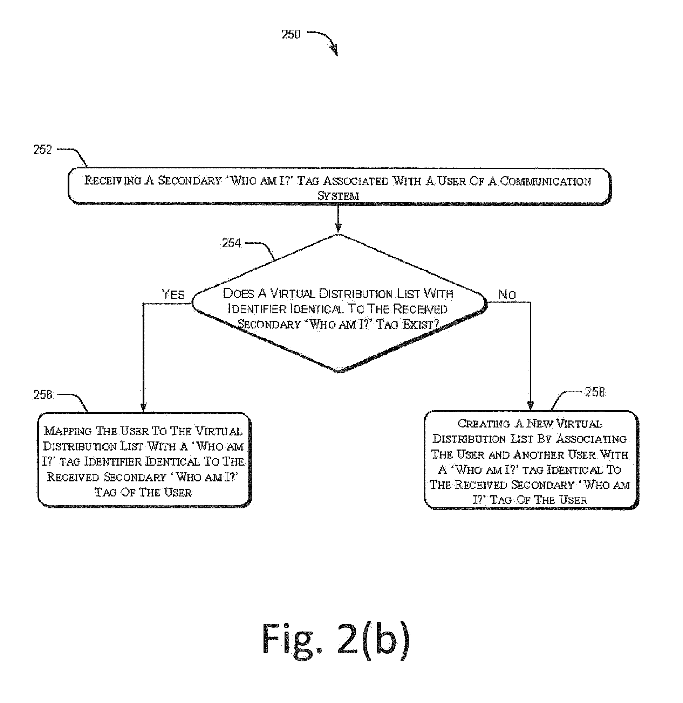

The manner in which the systems and methods of providing virtual distribution lists shall be implemented has been explained in details with respect to the Figures 1 and 2. While aspects of described systems and methods for providing virtual distribution list can be implemented in any number of different computing systems, transmission environments, and/or configurations, the embodiments are described in the context of the following exemplary system(s).

It will also be appreciated by those skilled in the art that the words during, while, and when as used herein are not exact terms that mean an action takes place instantly upon an initiating action but that there may be some small but reasonable delay, such as a propagation delay, between the initial action and the reaction that is initiated by the initial action. Additionally, the word "connected" and "coupled" is used throughout for clarity of the description and can include either a direct connection or an indirect connection.

Fig. 1 illustrates a communication network environment 100 implementation, describing a system 102 for creating and providing virtual distribution lists, in accordance with an embodiment of the present subject matter. The system 102 described herein, can be implemented in any network environment comprising a variety of network devices, including routers, bridges, servers, computing devices, storage devices, etc. In one implementation the system 102 is connected to one or more client devices 104-1, 104-2, 104-3, ..., 104-N, individually and commonly referred to as client device(s) 104 hereinafter, through a communication network 106.

The system 102 can be implemented as a variety of servers and communication devices. The servers and computing systems that can implement the described method(s) include, but are not limited to, mail server, central directory servers, database server, file server, print server, web server, application server, and the like. Although the description herein is with reference to mail servers, the methods and systems may be implemented in other server providing directory services, albeit with a few variations, as will be understood by a person skilled in the art. The system 102 may also be implemented as a computing device, such as a laptop computer, a desktop computer, a notebook, a workstation, a mainframe computer, a server and the like. The system 102 described herein, can also be implemented in any network environment comprising a variety of network devices, including routers, bridges, servers, computing devices, storage devices, etc.

The client devices 104 may be implemented as, but are not limited to, desktop computers, hand-held devices, laptops or other portable computers, tablet computers, mobile phones, PDAs, smartphones, and the like. Further, the client devices 104 may include devices capable of exchanging data to provide connectivity to different communicating devices and computing systems. Such devices may include, but are not limited to, data cards, mobile adapters, wireless (WiFi^{™}) adapters, routers, a wireless modem, a wireless communication device, a cordless phone, a wireless local loop (WLL) station, and the like. As client devices 104 may be stationary or mobile and may also be understood to be a mobile station, a terminal, an access terminal, a subscriber unit, a station, etc.

The network 106 may be a wireless or a wired network, or a combination thereof. The network 106 can be a collection of individual networks, interconnected with each other and functioning as a single large network (e.g., the internet or an intranet). Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN). Depending on the technology, the network 106 includes various network entities, such as gateways, routers; however, such details have been omitted for ease of understanding.

According to an implementation of the present subject matter, each of the client devices 104 may implement a local client application to exchange information and utilize directory services among respective client device 104 and the system 102 through the network 106. It will be appreciated, that the local client application is a functional modules that run on the client devices 104. As described earlier, the client devices 104 are used by end users to avail directory services provided by the system 102. In one implementation, the system 102 is a central server providing directory services to the client devices 104 through LDAP operations.

In one implementation, the system 102 includes processor(s) 112. The processor 112 may be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory.

The functions of the various elements shown in the figure, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), non-volatile storage. Other hardware, conventional and/or custom, may also be included.

Also, the system 102 includes interface(s) 114. The interfaces 114 may include a variety of software and hardware interfaces that allow the system 102 to interact with the entities of the network 106, or with each other. The interfaces 114 may facilitate multiple communications within a wide variety of networks and protocol types, including wire networks, for example, LAN, cable, etc., and wireless networks, for example, WLAN, cellular, satellite-based network, etc.

The system 102 may also include a memory 116. The memory 116 may be coupled to the processor 112. The memory 116 can include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

Further, the system 102 may include module(s) 118 and data 120. The modules 118, amongst other things, include routines, programs, objects, components, data structures, etc., which perform particular tasks or implement particular abstract data types. The modules 118 may also be implemented as, signal processor(s), state machine(s), logic circuitries, and/or any other device or component that manipulate signals based on operational instructions.

Further, the modules 118 can be implemented in hardware, instructions executed by a processing unit, or by a combination thereof. The processing unit can comprise a computer, a processor, a state machine, a logic array or any other suitable devices capable of processing instructions. The processing unit can be a general-purpose processor which executes instructions to cause the general-purpose processor to perform the required tasks or, the processing unit can be dedicated to perform the required functions.

In another aspect of the present subject matter, the modules 118 may be machine-readable instructions (software) which, when executed by a processor/processing unit, perform any of the described functionalities. The machine-readable instructions may be stored on an electronic memory device, hard disk, optical disk or other machine-readable storage medium or non-transitory medium. In one implementation, the machine-readable instructions can be also be downloaded to the storage medium via a network connection.

In an implementation, the module(s) 118 includes a tag detection module 122, list generation module 124, mapping module 126, and other module(s) 128. The other module(s) 128 may include programs or coded instructions that supplement applications or functions performed by the system 102. In said implementation, the data 120 includes a user tag data 130, virtual distribution list data 132, user data 134, and other data 136. The other data 136, amongst other things, may serve as a repository for storing data that is processed, received, or generated as a result of the execution of one or more modules in the module(s) 118. Although the data 120 is shown internal to the system 102, it may be understood that the data 120 can reside in an external repository (not shown in the figure), which may be coupled to the system 102. The system 102 may communicate with the external repository through the interface(s) 114 to obtain information from the data 120.

As mentioned before, in one implementation of the present subject matter, the system 102 is configured to dynamically generate and provide virtual distribution lists in a communication network. In said implementation, the virtual distribution lists generated by the system 102 based on the 'Who am I?' tags associated with different users. It would be understood by those skilled in the art that users utilizing directory services and connected to a central server, such as the system 102 are associated with a 'Who am I?' tag to complete LDAP operations.

The users may connect to the system 102 through the client devices 104 to obtain directory services based on LDAP operations. According to an implementation of the present subject matter, the users, through their client devices 104, may edit the primary 'Who am I?' tag associated with them to define new secondary 'Who am I?' tags. For example, a user John William having an associated primary 'Who am I?' tag as 'JohnW' may define a secondary 'Who am I?' tag for himself as 'Managers'. In such a situation, the secondary 'Who am I?' tag defined by John William may be utilized to be included in virtual distribution lists created by the system 102. As described before, the users may define more than one secondary 'Who am I?' tags to be associated with different virtual distribution lists generated by the system 102.

In one implementation of the present subject matter, the tag detection module 122 of the system 102 is configured to detect 'Who am I?' tags associated with different users. Different users may define different 'Who am I?' tags and one user may define more than one secondary 'Who am I?' tag. In such a scenario where users define secondary 'Who am I?' tags, it may so happen that a group of users may have an identical 'Who am I?' tag associated with them. In said implementation, the presence of identical 'Who am I?' tag among a group of users may either be coincidental or intentional and may not effect the generation of virtual distribution lists. For example, the user John William may define a secondary 'Who am I?' tag associated with him as 'John'. It may so happen that another user 'John Abraham', coupled to the system 102, has an already associated primary 'Who am I?' tag of 'John'. Further, another user 'John Maidley' may also define his secondary 'Who am I?' tag as 'John'. In such a situation, the tag detection module 122 may detect that three users, John William, John Abraham, and John Maidley as a group of users that have identical 'Who am I?' tags.

In another implementation, the tag detection module 122 may also identify same users to be a part of more than one group having an identical 'Who am I?' tag. For example, the use 'John William' may define more than one secondary 'Who am I?' tags to be associated with him. For instance, apart from a secondary 'Who am I?' tag of 'John', John William may also define another secondary 'Who am I?' tag as 'Managers' to be associated with himself. In such a situation, the tag detection module 122 may identify John William to have a secondary 'Who am I?' tag of 'Managers' to be identical to a group of 6 users. Hence, the tag detection module 122 may in turn identify the user John William to be associated with two groups having identical 'Who am I?' tags, one group having 'John' as the identical 'Who am I?' tag and the other 'Managers'. Therefore, according to an implementation of the present subject matter, the tag detection module 122 may identify same users to be a part of more than one group having an identical 'Who am I?' tags.

According to yet another implementation of the present subject matter, the list generation module 124 of the system 102 is configured to generate virtual distribution lists based on the groups identified by the tag detection module 122. For example, the three users, John William, John Abraham, and John Maidley, were identified to be a part of a common group with identical 'Who am I?' tags of 'John'. In such situation, the list generation module 124 may generate a virtual distribution list including the three users John William, John Abraham, and John Maidley. In one implementation, the virtual distribution list generated by the list generation module 124 are identified based on the 'Who am I?' tag according to which, the virtual distribution list was created. In other words, the virtual distribution list created for the three described Johns based on their identical 'Who am I?' tag 'John' may be identified based on the tag 'John'.

As described before, since some users may be identified by the tag detection module 122 to be part of more than one group having identical 'Who am I?' tags, the users may in turn be also made part of more than one virtual distribution lists. Therefore, in another implementation, the list generation module 124 may generate virtual distribution lists where one user is a part of more than one such generated virtual distribution lists. For example, in accordance with the above described situation, John William may also associate a secondary 'Who am I?' tag of 'Managers' to be identified as a part of another group with users having an identical 'Who am I?' tag of 'Managers'. Based on the identified group, the list generation module 124 may associate John William with the virtual distribution lists of 'Managers' as well; thereby making John William a part of two virtual distribution lists, identified based on tags of 'John' and 'Managers'.

Since the users associated with the system 102 have the liberty to define and dynamically update their secondary 'Who am I?' tags, it may so happen that a user may define a secondary 'Who am I?' tag for which either a virtualization distribution list already exists or another user with an identical 'Who am I?' tag exists. For example, John William may be associated with two different virtual distribution lists, 'John' and 'Managers', however there may be other virtual distribution lists generated by the list generation module 124, say 'Researchers', and 'Executives' to which John William is not associated with. It would be understood that John William might have not been associated with the virtual distribution list of 'Researchers' and 'Executives' due to absence of a 'Who am I?' tag associated with John William that is identical to the 'Who am I?' tag of either 'Researchers' or 'Executives'. And therefore, a user, such as John William may modify/update/create a secondary 'Who am I?' tag that is either identical to one of already existing primary or secondary 'Who am I?' tag of another user or, identical to an 'Who am I?' tag identification of an already existing virtual distribution list to which he is not already associated with.

To this end, the mapping module 126 of the system 102 is configured to analyze the modified/updated/created secondary 'Who am I?' tags of the users. In one situation, upon analysis, the mapping module 126 may determine that the modified/updated/created secondary 'Who am I?' tag of a user is unique and non identical to any 'Who am I?' tag of another user or 'Who am I?' tag identifier of any other existing virtual distribution list. In another situation, the mapping module 126 may determine the modified/updated/created secondary 'Who am I?' tag of the user to be identical to a 'Who am I?' tag of another user. Based on such determination, the mapping module 126 may prompt the list generation module 124 to create a new virtual distribution list including the user and another user, based on the identical 'Who am I?' tags. For example, John William may create a new secondary 'Who am I?' tag as 'William' to be associated with him. The mapping module 126, upon identification of any change in the 'Who am I?' tags associated with John Williams may analyze the 'Who am I?' tags of other users and determine that another user Bill Williams has an identical 'Who am I?' tag of 'William'. Based on such a determination, the mapping module 126 may prompt the list generation module 124 to create a new virtual distribution list based on identifier 'William'.

In yet another situation, the mapping module 126 may determine the modified/updated/created secondary 'Who am I?' tag of the user to be identical to an already existing virtual distribution list. Based on such determination, the mapping module 126 may associate the user to such virtual distribution list. For example, John William may define a new secondary 'Who am I?' tag as 'Researchers' to be associated with him. Since a virtual distribution list with identical 'Who am I?' tag identifier 'Researchers' exists, the mapping module 126 may associate John William to the existing 'Researchers' virtual distribution list.

In one implementation, the users may, instead of being associated with an already existing virtual distribution list, or a new virtual distribution list, may be disassociated from an already existing virtual distribution list of which they are already associated. The disassociation may be based on the dynamically modified/updated secondary 'Who am I?' tag of the users. In other words, during modification/updation of secondary 'Who am I?' tag, a user may change the tag based on which he was associated with a particular virtual distribution list, due to which the user may be disassociated with that particular virtual distribution list. For example, the user John William who is already associated with four virtual distribution lists, such as 'John', 'William', 'Managers', and 'Researchers', during modification of his secondary 'Who am I?' tag, may modify his secondary 'Who am I?' tag of 'William' to define another secondary 'Who am I?' tag of 'Will'. Based on this modification, the mapping module 126 may determine the 'Who am I?' tag 'Will' to be non identical to the 'Who am I?' tag identifier 'William' of the virtual distribution list. Upon such determination, the mapping module 126 may disassociate John William from the virtual distribution list with 'Who am I?' tag identifier as 'William'.

It would be understood that based on the modified secondary 'Who am I?' tag to 'Will', John William may be associated with either another user's tag to create a new virtual distribution list, or may be associated with an already existing virtual distribution list of 'Will' based on the techniques already described above. The details of the same with respect to present scenario have been omitted for the sake of brevity.

In another implementation, a user may entirely delete a particular secondary 'Who am I?' tag associated with him. In such scenarios, the mapping module 126 may disassociate the user from virtual distribution list to which he was associated with, based on the deleted 'Who am I?' tag. It would further be understood by those skilled in the art that a user by way of modifying, updating, creating, or deleting a secondary 'Who am I?' tag associated with him, in one embodiment, might not get associated or disassociated with any virtual distribution list. Instances where this may happen would be appreciated to be as process of modification, updation, creation, or deletion resulting in generation of a secondary 'Who am I?' tag that is both unique and non-identical to any other existing primary or secondary 'Who am I?' tags of other users or a 'Who am I?' tag identifier of existing virtual distribution list.

Hence, based on the above described technique, users of the system 102 may be dynamically associated or disassociated with a virtual distribution list for circulation of emails within a communication network.

According to an implementation of the present subject matter, upon dynamically mapping identical 'Who am I?' tags to create virtual distribution lists; the system 102 may also provide the generated virtual distribution lists to users as an operation of directory services. In other words, users may be provided with existing virtual distribution lists based on identifiers provided that the identifiers provided by the users correspond to at least one generated virtual distribution list. For example, a user may provide an identifier 'Managers' through his client device 104 to the system 102 to retrieve the virtual distribution list associated with the identifier 'Managers' through directory services. The mapping module 126 of the system 102 may receive such an identifier to determine the virtual distribution list with the 'Who am I?' tag identifier as 'Managers'.

In one implementation, along with the determination of a virtual distribution list with a 'Who am I?' tag identifier as 'Managers', the mapping module 126 may also determine individual users with either their primary or secondary 'Who am I?' tag as 'Managers'. It would be understood that these users would be the associated users of the virtual distribution list determined by the mapping module 126. Upon determination of such users and the virtual distribution list, the mapping module 126 may provide the list of user and the virtual distribution list to the user onto his client device 104. According to said implementation, the mapping module 126 may provide the user with the virtual distribution list as an option of 'All Managers' through which the user may send e-mail to all the associated users of the virtual distribution list.

The user may either choose to sent e-mail to one or more than one users provided by the mapping module 126 or, may choose send the e-mail to all the users associated with the virtual distribution list by choosing the 'All Managers' option. In situation where the user may choose the option of 'All Managers', the system 102 may sent the e-mail of the user to all the users associated with the virtual distribution list. For example, when a user queries for managers, the list of users having 'Who am I?' tag of managers would be provided along with an option of All managers. The user may choose recipients from individual users provided to him or may choose all by availing 'All Manager' option. The circulation of e-mails to either one or more users, or to the users of the virtual distribution list may be based on conventional known techniques and therefore, the details have been omitted for the sake of brevity.

Fig. 2(a) and 2(b) illustrates methods 200 and 250 for generating and providing virtual distribution lists, according to an embodiment of the present subject matter. The order in which the methods 200 and 250 are described is not intended to be construed as a limitation, and any number of the described method blocks can be combined in any order to implement the methods 200, 250, or any alternative methods. Additionally, individual blocks may be deleted from the methods without departing from the spirit and scope of the subject matter described herein. Furthermore, the methods can be implemented in any suitable hardware, software, firmware, or combination thereof.

The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

A person skilled in the art will readily recognize that steps of the methods can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media such as a magnetic disks and magnetic tapes, hard drives, or optically readable digital data storage media. The embodiments are also intended to cover both communication network and communication devices configured to perform said steps of the exemplary methods.

Referring to Fig. 2(a), at block 202, a plurality of users of a communication system with identical 'Who am I?' tags are identified as a group. In one implementation, the tag detection module 122 of the system 102 is configured to identify the users with identical 'Who am I?' tags. In said implementation, since the system 102 allows the users to create/update/modify/delete one or more secondary 'Who am I?' tags associated with them, a user of the system 102 may have multiple 'Who am I?' tags associated with him. The tag detection module 122, in one implementation may identify the identical tags from one of a primary 'Who am I?' and a secondary 'Who am I?' tag associated with each user from amongst the plurality of users. For example, a user John Cena may have a primary 'Who am I?' tag of 'John' associated with him. Two different users may define their secondary 'Who am I?' tags as 'John'. In such a situation, the tag detection module 122 of the system 102 may identify John Cena and the other two users to be part of a group with identical 'Who am I?' tags.

At block 204, a virtual distribution list for the group is dynamically generated. The virtual distribution list may include the identified plurality of users. In one implementation, the virtual distribution list allows simultaneous e-mail sharing among the plurality of users. In another implementation, the list generation module 124 of the system 102 is configured to generate the virtual distribution list for different identified groups. For reference purposes, each virtual distribution list including users with identical 'Who am I?' tags is identified based on a 'Who am I?' tag identifier that is identical to the common 'Who am I?' tag of the users associated with the virtual distribution list.

At block 206, the generated virtual distribution lists are provided to the users of the communication system. In one implementation, a user may provide an identifier based on which the mapping module 126 may determine the users with 'Who am I?' tag identical to the identifier and virtual distribution lists with identical 'Who am I?' tag identifier. The mapping module 126 may also provide the list of users along with the virtual distribution list. The virtual distribution list may be provided as an option of 'All <Identifier>' that can be chosen by the user to send e-mails simultaneously to the users associated with the virtual distribution list. For example, a user may provide 'John' as an identifier to retrieve users with a 'Who am I?' tag of 'John'. In such situation, the mapping module 126 may provide the list of all the users with an identical 'Who am I?' tag to the identifier 'John' and may also provide the virtual distribution list as an option of 'All John' to the user.

Referring to Fig. 2(b), at block 252, a secondary 'Who am I?' tag associated with a user of a communication system is received. The secondary 'Who am I?' tag may be a new 'Who am I?' tag that the user may have associated with himself, or might me a modified/updated 'Who am I?' tag of an already existing 'Who am I?' tag.

At block 254, it is determined whether a virtual distribution list with identifier identical to the received secondary 'Who am I?' tag exist. In one implementation, the mapping module 126 determines the existence of any such virtual distribution list. In case the mapping module 126 determines that one of such virtual distribution list exists ('Yes' path from block 254), the control flows to the block 256.

At block 256, the user is mapped to the virtual distribution list with a 'Who am I?' tag identifier identical to the received secondary 'Who am I?' tag of the user based on the received secondary 'Who am I?' tag of the user. For example, for a user, a secondary 'Who am I?' tag of 'William' may be received. The user may be associated with an already existing virtual distribution list with a 'Who am I?' tag identifier as 'William'. It would be understood that in case a virtual distribution list with a 'Who am I?' tag identifier identical to the received secondary 'Who am I?' tag is not available, the user may not be associated with any virtual distribution list with respect to the received 'Who am I?' tag.

On the other hand, in case the mapping module 126 determines that no such virtual distribution list exists ('No' path from block 254), the control flows to the block 258. At block 258, a new virtual distribution list is created by associating the user and another user with a 'Who am I?' tag identical to the received secondary 'Who am I?' tag of the user. It would be understood by those skilled in the art that in situations where the secondary 'Who am I?' tag of the user is not identical to 'Who am I?' tag of any other user, no virtual distribution list may be created.

Although the subject matter has been described with reference to specific embodiments, this description is not meant to be construed in a limiting sense. Various modifications of the disclosed embodiments, as well as alternate embodiments of the subject matter, will become apparent to persons skilled in the art upon reference to the description of the subject matter. It is therefore contemplated that such modifications can be made without departing from the spirit or scope of the present subject matter as defined.

## Claims

1. A method for generating virtual distribution list comprising:
identifying a plurality of users of a communication system accessing directory services with identical identity tags, wherein the identical identity tags comprise one of a primary identity tag and a secondary identity tag associated with a user from amongst the plurality of users, and wherein the secondary identity tag is user defined; and
generating, dynamically, a virtual distribution list including the identified plurality of users, wherein the virtual distribution list allows simultaneous e-mail sharing among the plurality of users.

2. The method as claimed in claim 1, wherein the primary identity tag and the secondary identity tag associated with the user are light weight directory access protocol's (LDAP's) 'Who am I?' tags, wherein the secondary identity tag is defined by the user.

3. The method as claimed in claim 1, the method further comprising providing the virtual distribution list to any user of the communication system through directory services.

4. The method as claimed in claim 1, wherein the user is associated with a plurality of secondary identity tags, and wherein the plurality of secondary identity tags are user defined.

5. The method as claimed in claim 1, the method further comprising:
receiving an identifier from the user of the communication system to access directory services, wherein the identifier is indicative of at least one virtual distribution list; and
providing at least one of the plurality of users with associated identity tags identical to the received identifier and a virtual distribution list with identifier identical to the received identifier, through directory services to the user.

6. The method as claimed in claim 1, the method further comprising:
receiving a secondary identity tag associated with a user of the communication system accessing directory services, wherein the user is identified based on an associated primary identity tag unique to the user;
identifying a virtual distribution list with an identifier identical to the received secondary identity tag of the user, wherein the virtual distribution list includes one or more users of the communication system; and
mapping the user to the identified virtual distribution list including the one or more users based on the secondary identity tag of the user.

7. A system (102) for generating virtual distribution lists comprising:
a processor (112);
a tag detection module (122), coupled to the processor (112), configured to identify a plurality of users of a communication system accessing directory services with identical identity tags, wherein the identical identity tags comprise one of a primary identity tag and a secondary identity tag associated with a user from amongst the plurality of users, and wherein the secondary identity tag is user defined; and
a list generation module (124), coupled to the processor (112), configured to dynamically generate a virtual distribution list including the identified plurality of users, wherein the virtual distribution list allows simultaneous e-mail sharing among the plurality of users.

8. The system (102) as claimed in claim 7, wherein the primary identity tag and the secondary identity tag associated with the user are light weight directory access protocol's (LDAP's) 'Who am I?' tags.

9. The system (102) as claimed in claim 7, wherein the system (102) further comprises a mapping module (126) configured to:
receive an identifier from the user of the communication system to access directory services, wherein the identifier is indicative of at least one virtual distribution list; and
provide, to the user, at least one of the plurality of users with identity tag identical to the received identifier and a virtual distribution list with identifier identical to the received identifier through directory services.

10. The system (102) as claimed in claim 7, wherein the system (102) further comprises a mapping module (126) configured to:
receive a secondary identity tag associated with a user of the communication system accessing directory services, wherein the user is identified based on an associated primary identity tag unique to the user;
identify a virtual distribution list with identifier identical to the received secondary identity tag of the user, wherein the virtual distribution list includes one or more users of the communication system; and
map the user to the identified virtual distribution list including the one or more users based on the secondary identity tag of the user.

11. A non-transitory computer-readable medium having embodied thereon a computer readable program code for executing a method comprising:
identifying a plurality of users of a communication system with identical identity tags and accessing directory services, wherein the identical identity tags comprises one of a primary identity tag and a secondary identity tag associated with a user from amongst the plurality of users, and wherein the secondary identity tag is user defined; and
generating, dynamically, a virtual distribution list including the identified plurality of users, wherein the virtual distribution list allows simultaneous e-mail sharing among the plurality of users.

12. The non-transitory computer-readable medium as claimed in claim 11, the method further comprising:
receiving a secondary identity tag associated with a user of the communication system accessing directory services, wherein the user is identified based on an associated primary identity tag unique to the user;
identifying a virtual distribution list with an identifier identical to the received secondary identity tag of the user, wherein the virtual distribution list includes one or more users of the communication system; and
mapping the user to the identified virtual distribution list including the one or more users based on the secondary identity tag of the user.
